Europäisches Patentamt

European Patent Office

Office européen des brevets

(19)

(11) Numéro de publication: **0 022 689**
**B1**

(12) **FASCICULE DE BREVET EUROPEEN**

(45) Date de publication du fascicule du brevet: **14.12.83**

(51) Int. Cl.³: **G 01 C 19/04**

(21) Numéro de dépôt: **80400895.1**

(22) Date de dépôt: **18.06.80**

(54) Perfectionnement à un frein centrifuge pour gyroscope suspendu à la cardan.

(30) Priorité: **04.07.79 FR 7917319**

(43) Date de publication de la demande:
**21.01.81 Bulletin 81/3**

(45) Mention de la délivrance du brevet:
**14.12.83 Bulletin 83/50**

(84) Etats contractants désignés:
**BE CH DE GB IT LI SE**

(56) Documents cités:
**FR - A - 870 761**
**FR - A - 1 403 736**
**GB - A - 790 175**
**US - A - 3 941 001**

(73) Titulaire: **SOCIETE FRANCAISE D'EQUIPEMENTS POUR LA NAVIGATION AERIENNE (S.F.E.N.A.)**
**B.P. 59 Aérodrome de Villacoublay**
**F-78140 Velizy Villacoublay (FR)**

(72) Inventeur: **Chombard, Pierre**
**64, rue Denfert Rochereau**
**F-92100 Boulogne (FR)**
Inventeur: **Darni, Daniel**
**192 avenue de la Division Leclerc Tour No 1**
**F-94190 Villeneuve St Georges (FR)**

(74) Mandataire: **Rinuy, Guy et al,**
**Cabinet Rinuy et Santarelli 14, Avenue de la Grande Armée**
**F-75017 Paris (FR)**

Courier Press, Leamington Spa, England.

Perfectionnement a un frein centrifuge pour gyroscope suspendu à la cardan

La présente invention concerne un perfectionnement à un frein centrifuge pour les gyroscopes suspendus à la Cardan, et, en particulier, mais non limitativement, pour les horizons gyroscopiques et les gyroscopes bidirectionnels servant à indiquer la position d'un avion autour de ses axes de roulis, de tangage et de cap.

On sait que, lorsque le rotor du gyroscope tourne à sa vitesse de régime, le couple moteur qui assure sa rotation est égal au couple résistant provoqué par les paliers et par la résistance de l'air. Le gyroscope possède alors les propriétés remarquables qui justifient son emploi, en particulier l'axe du rotor garde une orientation fixe dans l'espace. Si le couple moteur vient à diminuer ou à disparaître, soit involontairement, soit quand on veut arrêter l'instrument, le rotor continue à tourner sur sa lancée en décélérant par suite de l'action du couple résistant indiqué ci-dessus. Si l'axe du rotor n'est pas perpendiculaire à l'axe extérieur de la suspension de Cardan, ce couple résistant a une composante suivant l'axe extérieur de la suspension dont l'action sur le rotor se manifeste par une précession, c'est-à-dire par une rotation autour de l'axe intérieur de la suspension qui tend à rapprocher l'axe du rotor de l'axe extérieur de la suspension. Ce mouvement s'amorce dans le sens de l'écart initial, il est très lent mais sa vitesse va en augmentant. Etant donné l'existence de couples de frottement autour des axes de la suspension, ce mouvement ne s'amorce pratiquement que si l'axe du rotor se trouve écarté suffisamment de la perpendiculaire à l'axe extérieur de la suspension.

Lorsque ce phénomène se produit, l'axe du rotor peut venir s'aligner avec l'axe extérieur de la suspension, à moins qu'une butée, généralement prévue sur l'anneau intérieur de la suspension, n'arrête au préalable ledit mouvement en venant en contact avec l'anneau extérieur de la suspension. Dans les deux cas, le mouvement de précession s'arrête et un autre phénomène se manifeste; le rotor (dans l'hypothèse où il tourne encore) tend à entraîner en rotation tout l'équipage gyroscopique autour de son axe extérieur de suspension, avec une vitesse qui va en accélérant. Il en résulte des efforts centrifuges qui peuvent entraîner des détériorations de l'instrument.

On connaît des dispositifs conçus pour empêcher ces effets malencontreux. Ils consistent essentiellement à provoquer, lorsque l'alimentation de l'instrument est coupée, volontairement ou non, l'apparition d'une butée ou d'un frein qui limite les rotations autour de l'axe extérieur de la suspension. Ces dispositions présentent l'inconvénient de limiter du même coup les possibilités de contrôle des évolutions du véhicule par le gyroscope alors que ce dernier, continuant à tourner sur sa lancée, peut être encore utilisé pendant un temps assez long, dans les horizons gyroscopiques avec érecteurs mécaniques à billes ou à pendules par exemple.

Un frein centrifuge pour gyroscope suspendu à la Cardan qui d'une part, supprime cet inconvénient du blocage ou du freinage de l'anneau extérieur de ladite suspension lorsque l'alimentation du gyroscope est interrompue, tant que le gyroscope tourne à une vitesse suffisante pour permettre le contrôle des évolutions du support du gyroscope, et dans lequel d'autre part, l'action de freinage est indépendante de l'accélération d'ensemble engendrée dans le support du gyroscope au cours des évolutions que ce dernier doit contrôler, ledit frein centrifuge fonctionnant aussi bien dans le cas où une butée est prévue pour limiter le déplacement relatif des deux anneaux de suspension que dans le cas où une telle butée ne l'est pas, a été décrit dans le brevet français n° 1.403.736 de Monsieur Pierre CHOMBARD.

Ce brevet décrit un frein centrifuge pour gyroscope suspendu à la Cardan, comportant au moins deux masselottes uniformément réparties sur une face de l'anneau extérieur de suspension, le long d'une circonférence dont le centre se trouve sur l'axe extérieur de la suspension, chacune d'elles étant liée à l'anneau extérieur de la suspension et mobile dans un plan perpendiculaire à l'axe extérieur de ladite suspension, de façon à pouvoir venir frotter sur une partie intérieure cylindrique du boîtier et exercer ainsi une action de freinage de la rotation de l'ensemble du gyroscope et de sa suspension autour de l'axe extérieur de cette dernière;

Au moins un resort de rappel lié aux masselottes;

Au moins une butée limitant la course des masselottes ver l'intérieur du boîtier;

Et un dispositif de compensation entre lesdites masselottes pour que les forces d'inertie qui peuvent y être engendrées par l'accélération d'ensemble du support au cours de ses évolutions propres, évolutions que le gyroscope a pour but de contrôler s'annulent entre-elles.

Toutes les masselottes étant immobilisées en position de repos par la ou les butées tant que la tension exercée par le ou les ressorts sur lesdites masselottes est supérieure aux forces centrifuges qui y sont engendrées par la rotation de l'anneau extérieur de la suspension autour de l'axe extérieur de cette dernière, et exerçant une action de freinage de ladite rotation à partir du moment où sa vitesse angulaire dépasse une valeur réglable prédéterminée.

La présente invention a pour objet, une simplification technique de réalisation du frein centrifuge, tel que décrit dans le brevet CHOMBARD n° 1.403.736, en vue d'obtenir le même résultat par une conception différente, ce qui ne constitue pas une chose évidente.

Le brevet FRANCAIS 870.761 LUFTFAHART-GERÄTEWERK décrit un frein à friction à deux parties; une partie à deux appendices est fixée à l'axe intérieur du cadre et l'autre partie en forme d'anneau est fixée à un élément solidaire de l'instrument de sorte que, par suite du basculement du gyroscope vers l'un ou l'autre côté, l'un des appendices s'applique contre la partie précitée en forme d'anneau.

Dans ce brevet il n'est à aucun moment question de deux masselottes dont la masse est sensiblement répartie le long d'une circonférence dont le centre se trouve sur l'axe extérieur de la suspension tel que décrit dans le brevet FRANCAIS 1.403.736.

La présente invention vise un frein centrifuge pour gyroscope suspendu à la Cardan dans un boîtier fixé sur un véhicule, l'anneau intérieur de la suspension pouvant comporter une butée pour limiter les déplacements relatifs à l'axe du rotor et de l'axe extérieur de la suspension, et comportant au moins deux masselottes dont la masse est sensiblement répartie le long d'une circonférence dont le centre se trouve sur l'axe extérieur de ladite suspension, montées sur une face de l'anneau extérieur de suspension qui s'étend perpendiculairement à l'axe extérieur et susceptibles de se déplacer dans un plan parallèle à cette face de façon à pouvoir venir frotter sur une partie intérieure cylindrique du boîtier et exercer ainsi une action de freinage de la rotation de l'ensemble du gyroscope et de sa suspension autour de l'axe extérieur de cette dernière; au moins un ressort de rappel lié aux masselottes; au moins une seconde butée limitant la course des masselottes vers l'intérieur du boîtier; toutes les masselottes étant immobilisées en position de repos sur la seconde butée tant que la force exercée par le ou les ressorts sur lesdites masselottes est supérieure aux forces centrifuges engendrées par la rotation de l'anneau extérieur de la suspension autour de l'axe extérieur de cette dernière, et exerçant une action de freinage de ladite rotation à partir du moment où sa vitesse angulaire dépasse une valeur réglable prédéterminée.

L'invention se caractérise en ce que les deux masselottes sont en forme de "C" indentiques et montées en opposition sur deux axes d'articulation; les axes d'articulation sont solidaires de l'anneau extérieur, diamétralement opposés et disposés symétriquement autour de l'axe extérieur de suspension XX'; chacune desdites masselottes comprend une partie centrale comportant deux extrémités et se prolongeant par deux lèvres de section réduite par rapport à cette partie centrale: à une extrémité une lèvre extérieure et à l'autre extrémité une lèvre intérieure venant derrière la lèvre extérieure de l'autre masselotte; le point d'articulation de chacune des masselottes sur l'axe d'articulation correspondant est situé, par rapport au point de contact entre masselotte et boitier en position de travail, du côté de la lèvre extérieure; un épaulement est prévu sur la partie centrale, à la naissance de la lèvre intérieure constituant, par construction, un appui permanent à l'extrémité de la lèvre extérieure de l'autre masselotte; ce qui a pour effet que tout déplacement angulaire de l'une des masselottes entraine obligatoirement l'autre en un déplacement angulaire équivalent par glissement conjugué; une butée interne sert d'appui aux masselottes, en position de repos, par l'action des ressorts de rappel, ce pendant que, en position de travail, de façon connue en soi, les bossages des masselottes prennent appui avec frottement sur la paroi interne du boîtier du gyroscope lors du déplacement des masselottes sous l'effet de la rotation de l'équipage gyroscopique.

Les caractéristiques et avantages de l'invention apparaîtront au cours de la description qui va suivre, à partir des dessins annexés, donnés à titre d'exemple non limitatif.

La figure 1 est une vue en perspective du système de frein selon l'invention.

Les figures 2 et 3 sont des vues de face du système de frein précité, respectivement en position de repos (fig. 2) et en position de travail (fig. 3).

On peut voir sur ces figures un anneau extérieur 1, partiellement représenté, servant de support au frein centrifuge.

Lequel frein centrifuge est constitué par deux masselottes, rappelant la forme d'un "C", strictement identiques, placées en opposition, articulées chacune autour d'un axe cylindrique 6, solidaire dudit anneau, formant l'axe d'articulation.

Ces masselottes en force de "C" peuvent conventionnellement être séparées en trois parties distinctes: la partie centrale (2) constituant le corps prolongé à une extrémité par une lèvre intérieure 3 et à l'autre par une lèvre extérieure 4 le point d'articulation de chacune des masselottes sur l'axe 6 correspondant est situé, par rapport au point de contact entre masselotte et boitier en position de travail, du côté de la lèvre exterieure 4.

Par construction, ces masselottes sont en contact de façon permanente et constituent un montage articulé circulaire parfaitement symétrique à déplacement conjugué: le déplacement de l'une entraîne obligatoirement le déplacement de l'autre.

On voit que le corps de chaque masselotte présente un épaulement 12 sur lequel vient en contact, en permanence, l'extrémité 14 de la lèvre extérieure 4 de la masselotte opposée; pendant que la lèvre intérieure 3 de chaque masselotte vient se prolonger derrière la lèvre extérieure de la masselotte opposée.

Par ailleurs, un bossage 5 prévu sur chaque masselotte est destiné à prendre appui avec frottement sur le bâti fixe de l'instrument, lors du déplacement angulaire des masselottes sous l'effet de la rotation autour de l'axe extérieur XX' de suspension de l'équipage gyroscopique.

Au moins un ressort de rappel 7 relie le corps de chaque masselotte à l'extrémité de la lèvre intérieure de la masselotte montée en opposition.

La tension initiale du ressort fixe la vitesse angulaire pour laquelle les bossages 5 entrent en contact avec le bâti, provoquant ainsi l'apparition du couple de frottement destiné à limiter la vitesse de rotation de l'équipage gyroscopique.

Cette vitesse limite est atteinte quand le couple de frottement, proportionnel à la force centrifuge s'exerçant sur les masselottes, est égal au couple d'entraînement.

Au moins une butée interne 8 sert d'appui au système en position de repos. 9 et 10 sont deux trous constituant les points d'encrage des extrémités du ressort 7.

Il résulte de ce montage que le déplacement angulaire de l'une des masselottes entraîne obligatoirement l'autre masselotte en un déplacement angulaire équivalent par glissement conjugué résultant de la disposition symétrique des axes d'articulation 6 desdites masselottes par rapport à l'axe XX' pré cité.

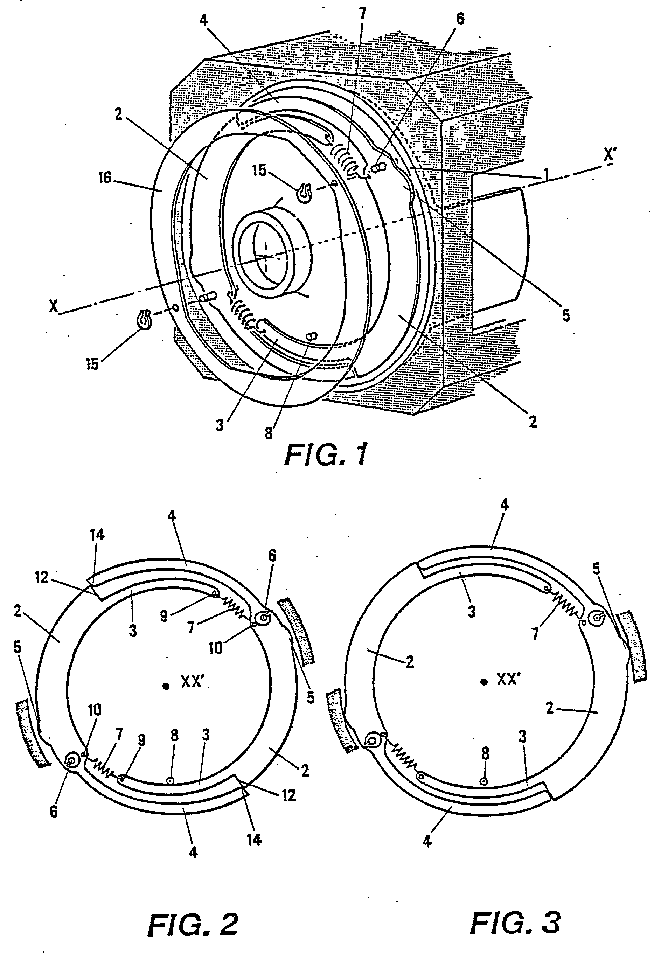

Les figures 2 et 3 du système de frein respectivement en position de repos et en position de travail illustrent bien son mode de fonctionnement.

La conjugaison du mouvement des masselottes rend cet ensemble sensible aux seules accélérations centrifuges autour de l'axe XX' laissant toute liberté à l'équipage gyroscopique lors des diverses accélérations rencontrées au cours du vol.

La figure 1 en perspective montre un flasque 16. Ce flasque sert simplement à maintenir les deux masselottes dans leur plan. Des circlips 15 maintiennent le flasque en position.

**Revendication**

Frein centrifuge pour gyroscope suspendu à la Cardan dans un boîtier fixé sur un véhicule, l'anneau intérieur de la suspension pouvant comporter une butée pour limiter les déplacements relatifs de l'axe du rotor et de l'axe extérieur (XX') de la suspension, frein qui comporte au moins deux masselottes dont la masse est sensiblement répartie le long d'une circonférence dont le centre se trouve sur l'axe extérieur (XX') de ladite suspension, montées sur une face de l'anneau extérieur de suspension (1) qui s'étend perpendiculairement à l'axe extérieur (XX') et susceptibles de se déplacer dans un plan parallèle à cette face de façon à pouvoir venir frotter sur une partie intérieure cylindrique du boîtier et exercer ainsi une action de freinage de la rotation de l'ensemble du gyroscope et de sa suspension autour de l'axe extérieur (XX') de cette dernière; au moins un ressort de rappel (7) lié aux masselottes; au moins une seconde butée (8) limitant la course des masselottes vers l'intérieur du boîtier; toutes les masselottes étant immobilisées en position de repos sur la second butée tant que la force exercée par le ou les ressorts (7) sur lesdites masselottes est supérieure aux forces centrifuges engendrées par la rotation de l'anneau extérieur (1) de la suspension autour de l'axe extérieur (XX') de cette dernière, et exerçant une action de freinage de ladite rotation à partir du moment où sa vitesse angulaire dépasse une valeur réglable prédéterminée, caractérisé en ce que les deux masselottes sont en forme de "C", identiques et montées en opposition sur deux axes d'articulation (6); les axes d'articulation (6) sont solidaires de l'anneau extérieur (1), diamétralement opposés et disposés symétriquement autour de l'axe extérieur de suspension (XX'), chacune desdites masselottes comprend une partie centrale (2) comportant deux extrémités et se prolongeant par deux lèvres de section réduite par rapport à cette partie centrale: à une extrémité une lèvre extérieure (4) et à l'autre extrémité une lèvre intérieure (3) venant derrière la lèvre extérieure de l'autre masselotte; le point d'articulation de chacune des masselottes sur l'axe (6) correspondant est situé, par rapport au point de contact entre masselotte et boîtier en position de travail, du côté de la lèvre extérieure (4); un épaulement (12) est prévu sur la partie centrale (2), à la naissance de la lèvre intérieure (3) constituant, par construction, un appui permanent à l'extrémité (14) de la lèvre extérieure (4) de l'autre masselotte; ce qui a pour effet que tout déplacement angulaire de l'une des masselottes entraîne obligatoirement l'autre en un déplacement angulaire équivalent par glissement conjugué; la butée interne (8) sert d'appui aux masselottes, en position de repos, par l'action des ressorts de rappel (7), cependant que, en position de travail, de façon connue en soi, les bossages (5) des masselottes prennent appui avec frottement sur la paroi interne du boîtier du gyroscope lors du déplacement des masselottes sous l'effet de la rotation de l'équipage gyroscopique.

**Patentanspruch**

Zentrifugalbremse für einen kardanisch gelagerten Kreisel in einem an einem Fahrzeug befestigten Gehäuse, wobei der Innenring der Aufhängung einen Anschlag zur Begrenzung der Relativversetzung zwischen der Rotorachse und der Außenachse (XX') der Aufhängung enthalten kann und die Bremse mindestens zwei Fliehgewichte enthält, deren Masse im wesentlichen längs eines Umfangs verteilt ist, dessen Zentrum sich an der Außenachse (XX') der Aufhängung befindet, die an einer sich senkrecht zur Außenachse (XX') erstreckenden Fläche des Außenringes (1) der Aufhängung angebracht sind und auf solche Art in einer zu dieser Fläche parallelen Ebene verschiebbar sind, daß sie mit einem zylindrischen Innenteil des Gehäuses in Reibanlage kommen und so eine Bremswirkung auf die Drehung der Kreiselanordnung und ihrer Aufhängung um die Außenachse (XX') derselben ausüben können, mit mindestens einer mit den Fliehgewichten verbundenen Rückstellfeder (7), mit mindestens einem den Weg der Fliehgewichte zum Inneren des Gehäuses begrenzenden zweiten Anschlag (8), wobei alle Fliehgewichte unbeweglich in Ruhelage an dem zweiten Anschlag sind, sobald die durch die Feder oder Federn (7) auf die Fliehgewichte ausgübte Kraft größer ist als die durch die Drehung des Außenringes (1) der Aufhängung um die Außenachse (XX') derselben erzeugten Zentrifugalkräfte, und eine Bremswirkung auf die Drehung von dem Moment an ausüben, an dem die Winkelgeschwindigkeit einen vorbestimmten einstellbaren Wert überschreitet, dadurch gekennzeichnet, daß die beiden Fliehgewichte identisch in Form eines "C" ausgebildet und einander entgegengesetzt an zwei Gelenkachsen (6) angebracht sind, daß die Gelenkachsen (6) am Außenring (1) diametral einander gegenüber befestigt und symmetrisch um die Außenachse (XX') der Aufhängug angeordnet sind, daß jedes Fliehgewicht einen Zentralabschnitt (2) enthält mit zwei Außenenden, und sich in zwei Randteile mit im Vergleich zum Zentralabschnitt verringertem Querschnitt verlängert: an einem Außenende in ein äußeres Randteil (4) und am anderen Außenende in ein inneres Randteil (3), das jeweils hinter dem äußeren Randteil des anderen Fliehgewichtes liegt, daß der Anlenkungspunkt jedes Fliehgewichtes an der entsprechenden Achse (6) bezüglich der Berührungsstelle zwischen dem Fliehgewicht und dem Gehäuse in der Arbeitsstellung an der Seite des äußeren Randteils (4) gelegen ist, daß an dem Beginn des inneren Randteils (3) ein Schultereinschnitt (12) an dem Zentralabschnitt (2) vorgesehen ist, der nach seinem Aufbau eine Dauerstütze an dem Außenrand (14) des äußeren Randteiles (4) des anderen Fliehgewichtes ergibt, zu dem Zweck, daß die gesamte Winkelverschiebung eines der Fliehgewichte zwangsweise dem anderen eine äquivalente Winkelverschiebung durch gemeinsames Gleiten mitteilt, wobei der Innenanschlag (8) in der Ruhelage durch die Wirkung der Rückholfedern (7) als Stütze dient, während in der Arbeitsstellung in an sich bekannter Weise die Buckel (5) der Fliehgewichte sich bei einer Verschiebung der Fliehgewichte unter der Wirkung der Rotation der Kreiselanordnung mit Reibung an der Innenwand des Kreiselgehäuses abstützen.

### Claim

A centrifugal brake for gyroscope suspended cardanically in a housing secured to a vehicle, the inner ring of the suspension being capable of comprising an abutment to limit relative movements of the rotor axis and the outer axis (XX') of the suspension, the brake comprising at least two counterweights the mass of which is substantially distributed along a circonference the center of which lies on the outer axis (XX') of said suspension, said counterweights being mounted on one face of the outer ring of suspension (1) which extends perpendicularly to the outer axis (XX') and being capable of moving parallel to such face so as to come into frictional engagement on an inner cylindric portion of the housing thereby exerting a braking action upon the rotation of the assembly of the gyroscope and the suspension thereof about the outer axis (XX') of the latter; at least one return spring (7) connected to the counterweights; at least a second abutment (8) limiting the motion of the counterweights towards the inside of the housing; all the counterweights being locked in a resting position on the second abutment as long as the force exerted by the spring or the springs (7) upon said counterweights is higher than the centrifugal forces generated by the rotation of the outer ring (1) of the suspension about the outer axis (XX') of the latter, and exerting a braking action upon said rotation from the time when its angular speed exceeds a predetermined adjustable value, characterized in that both counterweights are C-shaped, are identical and mounted oppositely on two articulation axes (6); the articulation axes (6) are made integral with the outer ring (1), diametrically opposite and symmetrically disposed about the outer suspension axis (XX') each of said counterweights comprises a central portion (2) having two ends and extended by two lips having a reduced section relative to said central portion, with the one end having an outer lip (4) and the other end having an inner lip (3) coming behind the outer lip of the other counterweight; the articulation point of each of the counterweights on the corresponding axis (6) is located on the side of the outer lip (4) relative to the contacting point between counterweight and housing in the working position; a shoulder (12) being provided on the central portion (2) at the origin of the inner lip (3) constituting by construction a permanent support at the end (14) of the outer lip (4) of the other counterweight; thereby resulting in any angular motion of one of the counterweights forcibly driving the other into an equivalent motion through conjugate sliding; the inner abutment (8) serves as a support for the counterweights in the resting position through the action of the return spring (7), whereas in the working position the bosses (5) of the counterweights frictionally bear in a manner known in itself on the inner wall of the gyroscope housing upon movement of the counterweights under the effect of the rotation of the gyroscopic mechanism.

FIG. 1

FIG. 2

FIG. 3